# EUROPÄISCHE PATENTSCHRIFT

(11) **EP 1 239 632 B1**
(45) Veröffentlichungstag und Bekanntmachung des Hinweises auf die Patenterteilung: **17.06.2009**
(21) Anmeldenummer: 02001253.0
(22) Anmeldetag: 17.01.2002
(51) Int. Cl.: H04L 12/56, H04L 12/46

(54) **System zum Übertragen eines Datenpaketstromes variabler Datenrate zwischen Netzwerken**
System for transmission of a data packet stream with variable data rate between networks
Système de transmission des flux de paquets de données en débit variable entre des réseaux de communication

(30) Priorität: 09.03.2001 DE 10111517
(43) Veröffentlichungstag der Anmeldung: 11.09.2002
(73) Patentinhaber: Rohde & Schwarz GmbH & Co. KG, 81671 München (DE)
(72) Erfinder: Schwiertz, Jacek, 12347 Berlin (DE); Zurek-Terhardt, Günter, 15537 Erkner (DE); Jäkel, Torsten, 12683 Berlin (DE)
(74) Vertreter: Körfer, Thomas

(56) Entgegenhaltungen:
- EP-A- 0 805 598
- EP-A- 0 952 753
- DE-A1- 19 913 339

## Beschreibung

In der modernen Datenverarbeitungstechnik ist es oftmals erforderlich, die Daten zwischen verschiedenen örtlich getrennten Netzwerken, beispielsweise zwischen lokalen Datennetzen (LAN) oder im Internet auszutauschen. Dazu werden bisher meist spezielle Telekommunikationsverbindungen benutzt, die nach den inzwischen gebräuchlichen Internet-Protokollen (IP) den Datenaustausch beispielsweise zwischen den Rechnern solcher örtlich voneinander abgesetzten Netzwerken ermöglichen. Solche Verbindungen sind insbesondere bei der Weitverkehrs-Datenkommunikation sehr aufwendig und teuer. Andererseits werden in jüngster Zeit immer häufiger hochqualitative teure Übertragungsleitungen eingesetzt, beispielsweise für die Zuspielung und Verteilung von digitalen Videodaten zwischen Studios, über welche Datenströme, die nach speziellen Standardverfahren in Transportströme von aufeinanderfolgenden Datenpaketen umgewandelt sind, mit konstanter Datenrate (Bandbreite) übertragen werden. Die Umwandlung erfolgt beispielsweise nach dem Standardverfahren der Multiprotocol Encapsulation (EN300192) in sogenannte MPEG2 TS- bzw. MPEG4 TS-Pakete, die wegen der zeitlich exakten weiteren Verarbeitung dann mit konstanter Datenrate übertragen werden. Dabei wird die physikalische Datenraten-Kapazität solcher Leitungen oftmals nicht vollständig ausgenutzt, da die konstante Datenrate dieser Transportströme meist geringer ist als die maximal mögliche Datenrate des Übertragungskanals.

Aus der Druckschrift EP. 0 805 598 A1 ist ein Verfahren zum Austausch von Stopfbits mit Zusatzdaten in einem MPEG-Videodatenstrom und eine Vorrichtung zur Durchführung des Verfahrens bekannt. Der Videodatenstrom weist Videodaten mit einer konstanten Bit-Rate und Videodaten mit einer variablen Bit-Rate in der Gestalt von Daten-Paketen auf, welche zum Auffüllen des Videodatenstroms Füll-Bytes verwenden. Dabei umfasst das Verfahren die Analyse eines Daten-Packets, um zu bestimmen, ob in dem Daten-Paket Füll-Bytes verwendet werden. In Abhängigkeit des Analyseergebnisses werden die Füll-Bytes aus dem Daten-Packet entfernt, um eine zusätzliche Übertragungs-Bandbreite zu erzeugen. Nach dem Entfernen der Füll-Bytes werden vorgegebene Privat-Daten zum Daten-Packet ergänzt, um die Übertragungs-Bandbreite auszunutzen.

Der Erfindung liegt die Aufgabe zugrunde, ein Verfahren aufzuzeigen, womit eine ungenutzte Übertragungskapazität eines Übertragungskanals zur Übertragung von zusätzlichen Datenströmen variabler Datenrate besonders übertragungseffizient ausgenutzt wird.

Die Aufgabe wird erfindungsgemäß gelöst durch die Merkmale des Anspruchs 1. Vorteilhafte Weiterbildungen sind Gegenstand der hierauf rückbezogenen Unteransprüche.

Die mit der Erfindung erzielten Vorteile bestehen insbesondere darin, dass die Übertragungskapazität des Übertragungskanals hinsichtlich des zu übertragenden erweiterten Datenpaket-Transportstroms TS+, welcher den Datenpaket-Transportstrom Z des Datenstroms IP und den Datenpaket-Transportstrom TS umfasst, und hinsichtlich der Eigenschaften der zu übertragenden, Daten bestmöglich ausgenutzt wird. Des weiteren ist der zu übertragende erweiterte Datenpaket-Transportstrom TS+ besonders genau an die Dimension des Übertragungskanals hinsichtlich dessen Übertragungskapazität anpassbar. Dadurch ist ferner die Bandbreite des Übertragungskanals zur Übertragung auf ein minimal erforderliches Maß reduzierbar. Die senderseitige Berechnung der zur Verfügung stehenden restlichen Nutzdatenrate, um die maximal mögliche Datenrate durch Auffüllung mit Datenpacketen zur erreichen, ermöglicht eine reibungslose und besonders zeitsparende Verarbeitung der Daten im Integrator zur Vorbereitung für die Übertragung durch den Übertragungskanal.

Gemäß der Erfindung kann die ungenutzte Kapazität einer hoch qualitativen Leitung, über welche ein Datenpaket-Transportstrom von konstanter aber gegenüber der maximal möglichen Datenrate des Übertragungskanals geringen Datenrate übertragen wird, für die zusätzliche Übertragung von Datenströmen variabler Datenrate zwischen örtlich voneinander abgesetzten Netzwerken wie LAN oder Internet ausgenutzt werden. Dazu ist senderseitig nur ein Integrator und empfangsseitig ein entsprechender Extractor erforderlich. Die in beliebiger Form zugeführten zusätzlichen Daten variabler Datenrate, beispielsweise Daten nach dem Internetprotokoll IP, müssen lediglich nach einem üblichen Standardverfahren in einen Transportstrom von Datenpaketen umgewandelt und mit entsprechenden Paketidentifizierungen PID versehen werden. Die Größe dieser Pakete wird zweckmäßiger Weise genauso wie bei den Paketen des über die Leitung bereits geführten Transportstromes konstanter Datenrate gewählt.

Da bei der Zusammenfassung der Transportströme von konstanter und variabler Datenrate ein neuer Nutzdatenstrom von insgesamt variabler Datenrate entsteht, ist es schließlich nur noch erforderlich, den Rest der verbleibenden Datenrate, die durch die physikalische Struktur des Übertragungskanals vorgegeben ist, durch Ersatzpakete auszufüllen, so daß schließlich wieder ein Gesamttransportstrom von konstanter Datenrate entsteht und über die Übertragungsstrecke übertragen wird. Empfangsseitig ist dann nur noch erforderlich, einerseits den Datenpaket-Transportstrom konstanter Datenrate unverändert im Originalzustand bit-genau aus dem zusammengefaßten Transportstrom abzuzweigen und zur weiteren Verarbeitung auszugeben während der zusätzliche Datenpaket-Transportstrom ausgelesen und dabei über die PID die als ungültig markierten Ersatzpakete ausgesondert werden, so daß schließlich wieder der ursprüngliche Datenpaket-Transportstrom von variabler Datenrate übrig bleibt, der dann gegebenenfalls wieder rückgewandelt wird in den ursprünglichen beispielsweise IP-Datenstrom, der im zugehörigen Netzwerk (LAN bzw. Internet) weiterverarbeitet wird.

Die Erfindung wird im Folgenden anhand schematischer Zeichnungen an einem Ausführungsbeispiel näher erläutert.

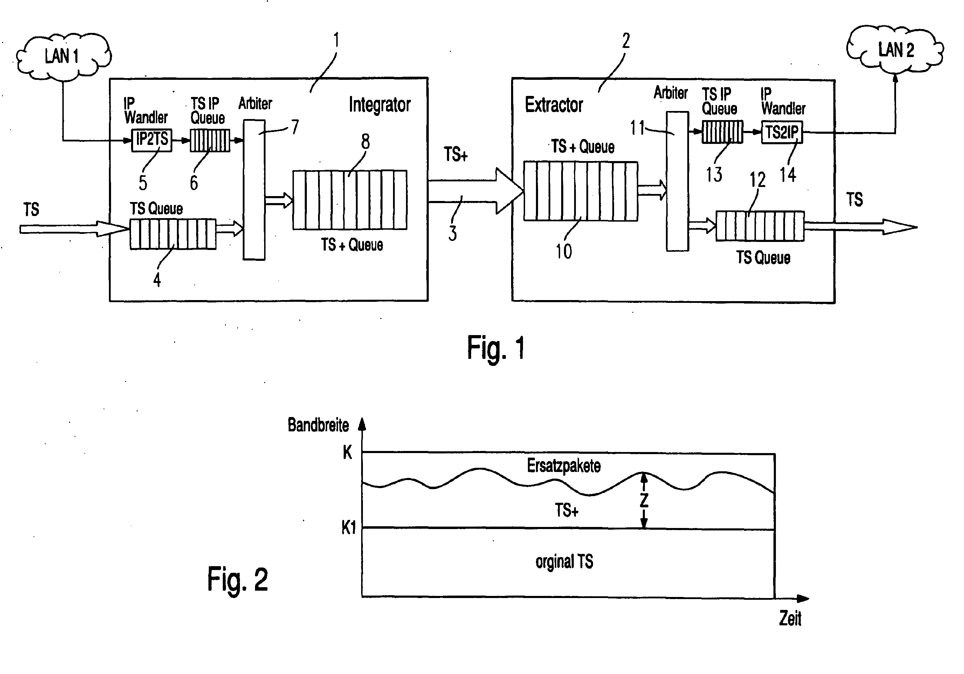

Fig. 1 zeigt den Prinzipaufbau eines erfindungsgemäßen Systems zum Übertragen eines IP-Datenstroms variabler Datenrate eines lokalen Datennetzes LAN 1 zu einem örtlich davon abgesetzten zweiten lokalen Datennetz LAN 2. Dazu wird senderseitig ein Integrator 1 und empfangsseitig ein Extractor 2 benutzt. Zur Übertragung dient ein zwischen Integrator 1 und Extractor 2 angeordneter Übertragungskanal 3, der gemäß Fig. 2 zur Übertragung einer vorgegebenen maximalen konstanten Datenrate K geeignet ist, also eine vorgegebene Bandbreite von K Bit aufweist. Dieser Übertragungskanal 3, beispielsweise eine hoch qualitative Leitung, dient ursprünglich zur Übertragung eines Datenpaket-Transportstromes TS von konstanter Datenrate K1, die geringer ist als die maximal möglich Datenrate K der Leitung 3, so daß ein erheblicher Teil der möglichen Datenrate ungenutzt bleibt. Dieser originale Datenpaket-Transportstrom TS ist beispielsweise nach dem Standardverfahren MPEG2 aufbereitet.

Der originale Transportstrom TS wird im Integrator 1 einem Pufferspeicher 4 zuführt, der zusätzlich zu übertragende Datenstrom, der z. B. nach dem Internetprotokoll IP aufbereitet ist, wird in einem Wandler 5 beispielsweise ebenfalls nach dem Standardverfahren der Multiprotocol Encapsulation EN300192 in MPEG2 TS-Pakete umgewandelt und ebenfalls einem Pufferspeicher 6 zugeführt. Die Umwandlung des ursprünglichen IP-Datenstromes in einen Datenpaket-Transportstrom Z muß nicht zwingend ein Standardverfahren sein, es können auch proberitäte Protokolle zur Übertragung benutzt werden, die Wandlung muß nur eindeutig sein.

Aus der bekannten maximalen Bandbreite K der Übertragungsleitung 3 und der konstanten Datenrate K1 des originalen Transportstromes TS wird im Integrator die von der Leitung noch zur Verfügung stehende restliche Bandbreite K-K1 berechnet. Im Integrator 1 ist also damit bekannt, mit welcher Datenrate jeweils noch die Zusatzdaten IP aus dem Pufferspeicher 6 über einen Arbiter 7 einem Ausgangs-Pufferspeicher 8 zugesetzt werden können. Der Arbiter 7 holt jeweils die Transportstrom-Pakete aus den beiden Pufferspeichern 4 und 6 und fügt sie im Ausgangspufferspeicher 8 zusammen. Die Anzahl der geholten Pakete bezieht sich immer auf einen festen Zeitraum und hängt ab von der Datenrate der Transportstrom-Pakete des originalen Transportstromes TS (alle Pakete des gesamten originalen Transportstromes TS werden in gleichbleibendem Originaltakt übertragen) und der verbleibenden ungenutzten Datenrate K-K1, die für die Übertragung von Transportstrompaketen aus dem Zusatzdatenstrom Z nutzbar ist. Der Ausgangs-Pufferspeicher 8 arbeitet mit einem anderen Takt als die beiden Input-Pufferspeicher 4 und 6. Es gilt, daß der Takt des Pufferspeichers 4 für TS plus dem Takt des Pufferspeichers 6 für die Zusatzdaten IP gleich oder kleiner ist als der Takt des Ausgangs-Pufferspeichers 8. Dieser Takt des Ausgangs-Pufferspeichers 8 entspricht der Bandbreite K des Übertragungskanals 3 geteilt durch die Länge der verwendeten Datenpakete, d. h. er ist abhängig von der Bandbreite des Übertragungskanals.

Am Ausgang des Pufferspeichers 8 entsteht ein erweiterter Datenpaket-Transportstrom TS+ von variabler Nutzdatenrate, wie dies Fig. 2 zeigt. Dabei bleibt die Zeitinformation des originalen Transportstromes TS unverändert.

Bei der heutzutage verwendeten Technologie für die Übertragung von Datenpaket-Transportströmen beispielsweise nach MPEG2 werden überregionale Netzverbindungen verwendet (z. B. ATM Asynchronus Transfer Modus), die ausschließlich Transportströme konstanter Datenrate verarbeiten können. Bei der Verwendung solcher Netzverbindungen muß die variable Datenrate des erzeugten erweiterten Transportstromes TS+ daher auf einen konstanten Wert aufgefüllt werden. Zu diesem Zweck werden Transportstrom-Ersatzpakete verwendet, welche die gleiche Signalisierung (Paketidentifizierung PID) aufweisen wie die Nutzdatenpakete des zusätzlichen Datenstromes IP. Diese Ersatzpakete füllen den verbleibenden Rest der Bandbreite des Übertragungskanals auf, wie dies Fig. 2 zeigt. Sie werden beim Hinzufügen bereits als ungültig markiert, bei Anwendung des MPEG2 Standards beispielsweise durch Setzen eines Bits im Kopf der TS+-Paketen. Durch diese Markierung werden diese ungültigen Ersatzpakete vom Empfänger nicht berücksichtigt.

Der erweiterte Transportstrom TS+ wird über die Leitung 3 dem Extractor 2 zugeführt, in welchen in umgekehrter Weise die Transportströme wieder voneinander getrennt werden. Dazu wird der ankommende Datenpaket-Transportstrom TS+ von konstanter Datenrate jedoch mit variabler Nutzdatenrate einem Eingangs-Pufferspeicher 10 zugeführt und der daraus ausgelesene Datenstrom dann wieder durch einen Arbiter 11 in zwei Datenströme aufgeteilt, nämlich den originalen Datenpaket-Transportstrom TS von konstanter Datenrate, der einem Pufferspeicher 12 zugeführt wird, und den Datenpaket-Transportstrom Z, der dem zusätzlichen Datenstrom IP von variabler Datenrate entspricht, der einem Pufferspeicher 13 zugeführt wird. Im Extractor 2 ist die Datenrate des originalen senderseitigen Datenstromes TS genau eingegeben. Mit diesem empfangsseitig bekannten Parametern kann der wiedergewonnene Transportstrom TS im originalen Modus unverändert aus dem Pufferspeicher 12 ausgegeben und unverfälscht weiterverarbeitet werden. Wenn erwünscht, kann dieser Transportstrom aber auch so ausgegeben werden, daß die Bytes der Pakete äquidistant zueinander erzeugt werden (sogenannter continuous mode). Das System kann also gegebenenfals auch als Transportstrommoduswandler wirken und den originalen Transportstrom TS von burst mode in continuous mode wandeln.

Im Extractor 2 bzw. im Arbiter 11 ist nicht nur die Datenrate des originalen Transportstromes bit-genau abgespeichert sondern auch die Identifizierung (packet identifier PID) der Datenpakete des zugesetzten Transportstromes von variabler Datenrate. Diese beiden Parameter werden im Arbiter 11 manuell oder durch automatische Einstellung empfangsseitig eingegeben. Aufgrund dieser Parameter verteilt der Arbiter 11 die Pakete entsprechend ihren PIDs auf die beiden Ausgangs-Pufferspeicher 12 und 13. Dabei werden alle Ersatzpakete, die mit den gleichen PIDs wie die Pakete des Zusatzdatenstroms Z versehen sind, zusätzlich aber senderseitig bereits als ungültig markiert wurden, vom Extractor verworfen und nicht in den Pufferspeicher 13 für die Zusatzdaten eingegeben. Über einen anschließenden Wandler 14 können die beispielsweise nach MPEG2 aufgeteilten und im Pufferspeicher 13 abgespeicherten Datenpakete dann wieder in den ursprünglichen IP-Datenstrom umgewandelt und dann dem empfangsseitigen Datennetz LAN 2 zugeführt werden. Der im Pufferspeicher 12 abgespeicherte restaurierte originale Datenpaket-Transportstrom TS kann der weiteren Verarbeitung, beispielsweise einer DVB Modulation (digitales Video Broadcasting) zugeführt werden.

Da der originale Transportstrom TS empfangsseitig unverändert bleiben soll, wird der Pufferspeicher 12 zeitlich exakt entsprechend der originalen Datenrate gesteuert. Der andere Pufferspeicher 13 ist nach einem anderen Restaurierungsverfahren gesteuert und zwar so, daß die gefilterten Transportstrompakete nach der Umkehrung des im Integrator 1 verwendeten eindeutigen Protokolls zu originalen Dateneinheiten zusammengefügt werden. Diese erzeugten originalen Zusatzdaten können an eine übergeordnete Applikation zur weiteren Verarbeitung gegeben werden. Im Falle von ursprünglichen IP-Datenpaketen werden Transportstrompakete zu MPEG2 private sections zusammengefügt. Die Korrektheit dieser private sections (Länge, CRC) wird geprüft und die IP-Pakete werden an eine weitere verarbeitende Applikation übergeben. Diese kann beispielsweise über einen speziellen Adapter, (NDIS driver) die Pakete direkt in den TCP/IP stack eines Rechners ausgeben. In der weiteren Applikation können zusätzliche IP Mechanismen angewendet werden, beispielsweise Filterung nach lokalen IP Adressen, Routing usw. Der verwendete physikalische Kanal ist bezüglich IP völlig transparent.

## Patentansprüche

1. Verfahren zum Übertragen eines Datenstromes (IP) variabler Datenrate zwischen Netzwerken (LAN 1, LAN 2), mit folgenden Verfahrensschritten:
Verwenden eines Übertragungskanals (3), der zur Übertragung eines Datenstromes von vorgegebener konstanter Datenrate (K) geeignet ist und über den ein Datenpaket-Transportstrom (TS) von konstanter und gegenüber der vorgegebenen Datenrate (K) des Übertragungskanals (3) geringerer Datenrate (K1) übertragen wird,
senderseitiges Zusammenfassen in einem Integrator (1) des zu übertragenden Datenstroms (IP) variabler Datenrate, der als Datenpaket-Transportstrom (Z) dem Integrator (1) zugeführt wird oder im Integrator (1) in einen solchen umgewandelt wird (Wandler 5), mit dem Datenpaket-Transportstrom (TS) von konstanter Datenrate zu einem erweiterten Datenpaket-Transportstrom (TS+) von variabler und maximal der vorgegebenen Datenrate (K) des Übertragungskanals (3) entsprechender Nutzdatenrate,
Auffüllen des dabei entstehenden Rests an Datenrate bis zur vorgegebenen maximal möglichen Datenrate (K) des Übertragungskanals (3) mit Ersatz-Datenpaketen und empfangsseitiges Wiedertrennen in einem Extractor (2) der entsprechend gekennzeichneten originalen Datenpakete-Transportströme von konstanter und variabler Datenrate, wobei dabei die als ungültig gekennzeichneten Ersatz-Datenpakete ausgesondert werden,
wobei die maximal zur Verfügung stehende Datenrate (K) des Übertragungskanals (3) und die konstante Datenrate (K1) des übertragenen Datenpaket-Transportstromes (TS) von konstanter Datenrate senderseitig dem Integrator (1) eingegeben werden und daraus die zur Verfügung stehende restliche Nutzdatenrate berechnet wird, worüber ein Arbiter (7) des Integrators (1) entsprechend gesteuert wird.

2. Verfahren nach Anspruch 1,
**dadurch gekennzeichnet,**
**dass** dem zugesetzten Datenpaket-Transportstrom (Z) von variabler Datenrate die gleiche Paketstruktur wie der Datenpaket-Transportstrom (TS) von konstanter Datenrate zugewiesen wird.

3. Verfahren nach Anspruch 1 oder 2,
**dadurch gekennzeichnet,**
**dass** den Ersatz-Datenpaketen die gleiche Paket-Identifizierung (PID) wie die Datenpakete des zugesetzten Datenpaket-Transportstromes (Z) zugewiesen wird.

4. Verfahren nach einem der vorhergehenden Ansprüche,
**dadurch gekennzeichnet,**
**dass** im Integrator (1) die zusammenzufassenden Datenpaket-Transportströme jeweils in Pufferspeichern (4, 6) zwischengespeichert werden.

5. Verfahren nach einem der vorhergehenden Ansprüche,
**dadurch gekennzeichnet,**
**dass** die zusammenzufassenden Datenpaket-Transportströme mittels eines Arbiters (7) im Integrator (1) in einem Ausgangs-Pufferspeicher (8) zwischengespeichert werden.

6. Verfahren nach Anspruch 5,
**dadurch gekennzeichnet,**
**dass** der Takt des Ausgangs-Pufferspeichers (8) entsprechend der vorgegebenen maximalen Datenrate (K) des Übertragungskanals (3) gewählt wird.

7. Verfahren nach einem der vorhergehenden Ansprüche,
**dadurch gekennzeichnet,**
**dass** im Extractor (2) der über den Übertragungskanal (3) übertragene erweiterte Datenpaket-Transportstrom (TS+) in einem Eingangs-Pufferspeicher (10) zwischengespeichert wird.

8. Verfahren nach einem der vorhergehenden Ansprüche,
**dadurch gekennzeichnet,**
**dass** der Extractor (2) einen Arbiter (11) aufweist, dem die Paket-Identifizierungen (PID) der senderseitig zusammengefassten Datenpaket-Transportströme und der Ersatz-Datenpakete sowie die bitgenaue senderseitige Datenrate des originalen Datenpaket-Transportstromes (TS) eingegeben werden, und der in Abhängigkeit davon den originalen Datenpaket-Transportstrom (TS) konstanter Datenrate von dem zugesetzten Datenpaket-Transportstrom variabler Datenrate trennt.

9. Verfahren nach Anspruch 8,
**dadurch gekennzeichnet,**
**dass** die voneinander wieder getrennten Datenpaket-Datenströme jeweils in gesonderten Pufferspeichern (12, 13) zwischengespeichert werden.

10. Verfahren nach einem der vorhergehenden Ansprüche,
**dadurch gekennzeichnet,**
**dass** der im Extractor (2) vom Datenpaket-Transportstrom (TS) konstanter Datenrate getrennte und von den Ersatz-Datenpaketen befreite Datenpaket-Transportstrom variabler Datenrate über einen Wandler (14) wieder in den ursprünglichen Datenstrom (IP) von variabler Datenrate umgewandelt und so dem empfangsseitigen Netzwerk (LAN 2) zugeführt wird.

## Claims

1. Method of transmitting a data stream (IP) of variable data rate between networks (LAN 1, LAN 2), with the following method steps:
use of a transmission channel (3), which is suitable for transmitting a data stream of a predetermined constant data rate (K), and via which a data packet transport stream (TS) of constant, and compared with the predetermined data rate (K) of the transmission channel (3) lower, data rate (K1) is transmitted,
transmitter-side combination in an integrator (1) of the variable data rate data stream (IP) which is to be transmitted, and which is fed as a data packet transport stream (Z) to the integrator (1) or converted (converter 5) into one in the integrator (1), with the data packet transport stream (TS) of constant data rate, into an extended data packet transport stream (TS+) of a variable payload data rate corresponding to the maximum extent to the predetermined data rate (K) of the transmission channel (3),
filling the resulting residue of data rate up to the predetermined maximum possible data rate (K) of the transmission channel (3) with dummy data packets,
and reception-side reseparation in an extractor (2) of the correspondingly identified original data packet transport streams of constant and variable data rate, the dummy data packets which are identified as invalid being separated out,
the maximum available data rate (K) of the transmission channel (3) and the constant data rate (K1) of the transmitted data packet transport stream (TS) of constant data rate being entered into the integrator (1) on the transmitter side, and from it the available remaining payload data rate, via which an arbiter (7) of the integrator (1) is controlled correspondingly, being calculated.

2. Method according to Claim 1,
**characterized in that**
the same packet structure as the data packet transport stream (TS) of constant data rate is assigned to the added data packet transport stream (Z) of variable data rate.

3. Method according to Claim 1 or 2,
**characterized in that**
the same packet identification (PID) as the data packets of the added data packet transport stream (Z) is assigned to the dummy data packets.

4. Method according to one of the preceding claims,
**characterized in that**
in the integrator (1), the combining data packet transport streams are each stored temporarily in buffer memories (4, 6).

5. Method according to one of the preceding claims,
**characterized in that**
the combining data packet transport streams are stored temporarily in an output buffer memory (8), by means of an arbiter (7) in the integrator (1).

6. Method according to Claim 5,
**characterized in that**
the clock cycle of the output buffer memory (8) is chosen corresponding to the predetermined maximum data rate (K) of the transmission channel (3).

7. Method according to one of the preceding claims,
**characterized in that**
in the extractor (2), the extended data packet transport stream (TS+), which is transmitted via the transmission channel (3), is stored temporarily in an input buffer memory (10).

8. Method according to one of the preceding claims,
**characterized in that**
the extractor (2) has an arbiter (11), into which the packet identifications (PID) of the data packet transport streams which are combined on the transmitter side, and of the dummy data packets, and the bit-precise transmitter side data rate of the original data packet transport stream (TS) are entered, and which, depending on them, separates the original data packet transport stream (TS) of constant data rate from the added data packet transport stream of variable data rate.

9. Method according to Claim 8,
**characterized in that**
the data packet transport streams, which are again separated from each other, are each stored temporarily in separate buffer memories (12, 13).

10. Method according to one of the preceding claims,
**characterized in that**
the variable data rate data packet transport stream, which is separated from the constant data rate data packet transport stream (TS) and freed of the dummy data packets in the extractor (2), is converted via a converter (14) back into the original variable rate data stream (IP), and thus fed to the reception-side network (LAN 2).

## Revendications

1. Procédé de transmission d'un flux de données (IP) à débit variable entre des réseaux de communication (LAN 1, LAN 2), comportant les étapes de procédé suivantes :
l'utilisation d'un canal de transmission (3), qui est approprié pour la transmission d'un flux de données d'un débit constant prédéterminé (K) et par l'intermédiaire duquel un flux de transport de paquets de données (TS) d'un débit plus faible (K1) constant et opposé au débit prédéterminé (K) du canal de transmission (3) est transmis,
l'ajout côté émetteur dans un intégrateur (1) du flux de données à transmettre (IP) à débit variable, qui est délivré en tant que flux de transport de paquets de données (Z) à l'intégrateur (1) ou est converti (convertisseur 5) dans l'intégrateur (1) lors de cet ajout, avec le flux de transport de paquets de données (TS) à débit constant en un flux de transport de paquets de données élargi (TS+) à débit utile variable et maximal correspondant au débit prédéterminé (K) du canal de transmission (3),
l'addition du reste en résultant à un débit jusqu'au débit maximal possible prédéterminé (K) du canal de transmission (3) avec des paquets de données de remplacement
et la séparation côté réception dans un extracteur (2) des flux de transport de paquets de données d'origine conformément caractérisés à un débit constant et variable, dans lequel en outre les paquets de données de remplacement désignés comme invalides sont éliminés,
dans lequel les débits de données maximaux disponibles (K) du canal de transmission (3) et les débits de données constants (K1) du flux de transport de paquets de données transmis (TS) à un débit constant côté émetteur sont entrés dans l'intégrateur (1) et de là est calculé le débit utile restant disponible, moyennant quoi un arbitre (7) de l'intégrateur (1) est commandé de façon correspondante.

2. Procédé selon la revendication 1, **caractérisé en ce que** la même structure de paquets que le transport de paquets de données (TS) à débit constant est affecté au flux de transport de paquets de données ajouté (Z) à débit variable.

3. Procédé selon la revendication 1 ou 2, **caractérisé en ce que** la même identification de paquets (PID) que les paquets de données du flux de transport de paquets de données ajouté (Z) est affectée aux paquets de données de remplacement.

4. Procédé selon l'une des revendications précédentes, **caractérisé en ce que**, dans l'intégrateur (1), les flux de transport de paquets de données ajoutés sont mémorisés dans des mémoires tampons respectives (4, 6).

5. Procédé selon l'une des revendications précédentes, **caractérisé en ce que** les flux de transport de paquets de données ajoutés au moyen d'un arbitre (7) dans l'intégrateur (1) sont mémorisés dans une mémoire tampon de sortie (8).

6. Procédé selon la revendication 5, **caractérisé en ce que** l'horloge de la mémoire tampon de sortie (8) est choisie conformément au débit maximal prédéterminé (K) du canal de transmission (3).

7. Procédé selon l'une des revendications précédentes, **caractérisé en ce que**, dans l'extracteur (2), le flux de transport de paquets de données élargi (TS+) transmis par l'intermédiaire du canal de transmission (3) est mémorisé dans une mémoire tampon d'entrée (10).

8. Procédé selon l'une des revendications précédentes, **caractérisé en ce que** l'extracteur (2) présente un arbitre (11), dans lequel sont entrées les identifications de paquets (PID) des flux de transport de paquets de données ajoutés côté émetteur et les paquets de données de remplacement ainsi que les débits de données précis de l'ordre du bit côté émetteur du flux de transport de paquets de données d'origine (TS), et celui-ci sépare indépendamment de cela le flux de transport de paquets de données d'origine (TS) à débit constant du flux de transport de paquets de données ajouté à débit variable.

9. Procédé selon la revendication 8, **caractérisé en ce que** les flux de données de paquets de données de nouveau séparés sont mémorisés dans des mémoires tampons individuelles respectives (12, 13).

10. Procédé selon l'une des revendications précédentes, **caractérisé en ce que** le flux de transport de paquets de données à débit variable libéré des paquets de données de remplacement et séparé du flux de transport de paquets de données (TS) dans l'extracteur (2) sont convertis par l'intermédiaire d'un convertisseur (14) de nouveau dans le flux de données d'origine (IP) à débit variable et ainsi est délivré au réseau de communication côté réception (LAN 2) .
